# EUROPEAN PATENT APPLICATION

(11) **EP 1 755 309 A2**
(43) Date of publication of application: **21.02.2007**
(21) Application number: 06118379.4
(22) Date of filing: 03.08.2006
(51) Int. Cl.: H04L 29/06

(54) **Dynamic configuration updating in a storage area network**

(30) Priority: 15.08.2005 US 204975
(71) Applicant: McData Corporation, Broomfield, CO 80021 (US)
(72) Inventor: Ramkumar, Gurumurthy D., Palo Alto, CO 94306 (US); Hofer, Larry, Arvada, CO 80005 (US); Ramesh, Sunil, Cupertino, CA 95014 (US); Chamdani, Joseph I., Santa Clara, CA 95051 (US); Cherabuddi, Raj, Saratoga, CA 95070 (US); Majszak, Greg, Johnstown, CO 80534 (US)
(74) Representative: Moore, Barry

(57) **Abstract**

Differential configuration update commands can be communicated and applied quickly and efficiently to active zone sets and zone set libraries, without requiring propagation of entire zone sets through a fabric of a SAN. Furthermore, the commands can be applied quickly to support dynamic configuration updates. Ordered differential configuration update commands can be applied to ordered zone set data structures to minimize update instruction communication requirements and optimize configuration update operations. In addition, differential configuration update commands can be applied to active zone set data structures (e.g., in an active zone set or a zone set library) to optimize configuration update operations.

## Description

### Technical Field

The invention relates generally to storage area networks, and more particularly to dynamic configuration updating in a storage area network.

### Background

Enterprise grid computing involves sharing heterogeneous resources (based on different platforms, hardware/software architectures, and computer languages) located in different places and belonging to different administrative domains over a network. For example, grid computing can employ unused resources (CPU cycles and/or disk storage) of many separate computers connected by a network (e.g., including a local network, a wide area network, or the Internet) to distribute and execute computerized processes across these resources. The collection of these disparate computers is treated as a virtual cluster embedded in a distributed telecommunications infrastructure. Generally, grid computing has various design goals, including solving problems too big for any single supercomputer, providing applications with better utilization of resources, and providing consistent interfaces to heterogeneous resources.

Such large scale computing and data requirements can present a data storage challenge, which can be at least partially addressed by a storage area network (SAN). A SAN may be implemented as a high-speed, special purpose network that interconnects different kinds of data storage devices with associated data servers on behalf of a large network of users. Typically, a SAN includes high-performance switches as part of the overall network of computing resources for an enterprise. The SAN is usually clustered in close geographical proximity to other computing resources, such as mainframe computers, but may also extend to remote locations for backup and archival storage using wide area network carrier technologies.

However, the mapping of applications to host computers is dynamic in a grid computing environment. Therefore, configuration changes in the SAN (e.g., zoning, other security parameters, and quality of service parameters) should be accepted and propagated quickly and efficiently throughout a fabric of a SAN. Unfortunately, existing SANs do not adequately support efficient dynamic configuration updates and therefore introduce large communication requirements and long delays for SAN reconfigurations, both of which can disrupt SAN service. Furthermore, existing approaches are not well suited for automation.

### Summary

Implementations described and claimed herein address the foregoing problems by communicating differential configuration update commands that can be applied quickly to active zone sets and zone set libraries, without requiring propagation of entire zone sets or libraries through a fabric of the SAN. In one implementation, ordered differential configuration update commands are applied to ordered zone set data structures to minimize update instruction communication requirements and optimize configuration update operations. In another implementation, differential configuration update commands are applied to active zone set data structures (e.g., in an active zone set or a zone set library) to optimize configuration update operations.

In some implementations, articles of manufacture are provided as computer program products. One implementation of a computer program product provides a computer program storage medium readable by a computer system and encoding a computer program. Exemplary storage media may include without limitation magnetic and optical disks, EEPROMS, flash memory, RAM, and other storage devices.

Accordingly the invention provides a method of updating a hierarchical configuration object as set forth in the independent method claims. Advantageous embodiments are provided in the dependent claims thereto. Systems for updating hierarchical configuration objects are also detailed in the independent system claims with advantageous embodiments provided in the dependent claims thereto. A computer program configured when executing on a computer to carry out the method steps of the method claims is also provided.

Other implementations are also described and recited herein.

### Brief Descriptions of the Drawings

FIG. 1 illustrates an exemplary computing and storage framework including a local area network (LAN) and a storage area network (SAN).

FIG. 2 illustrates an exemplary management client coupled to devices in a storage area network.

FIG. 3 illustrates a configuration update to an exemplary configuration module.

FIG. 4 illustrates a configuration update to an exemplary switch.

FIG. 5 illustrates a configuration update to a second exemplary switch.

FIG. 6 illustrates exemplary operations for updating configuration of a hierarchical configuration object of a configuration module.

FIG. 7 illustrates exemplary operations for updating configuration of a hierarchical configuration object of a switch.

FIG. 8 illustrates an environment that may be useful in an implementation of the described technology.

FIG. 9 illustrates a schematic of an exemplary switch that can implement operations for updating configuration of a hierarchical configuration object.

### Detailed Descriptions

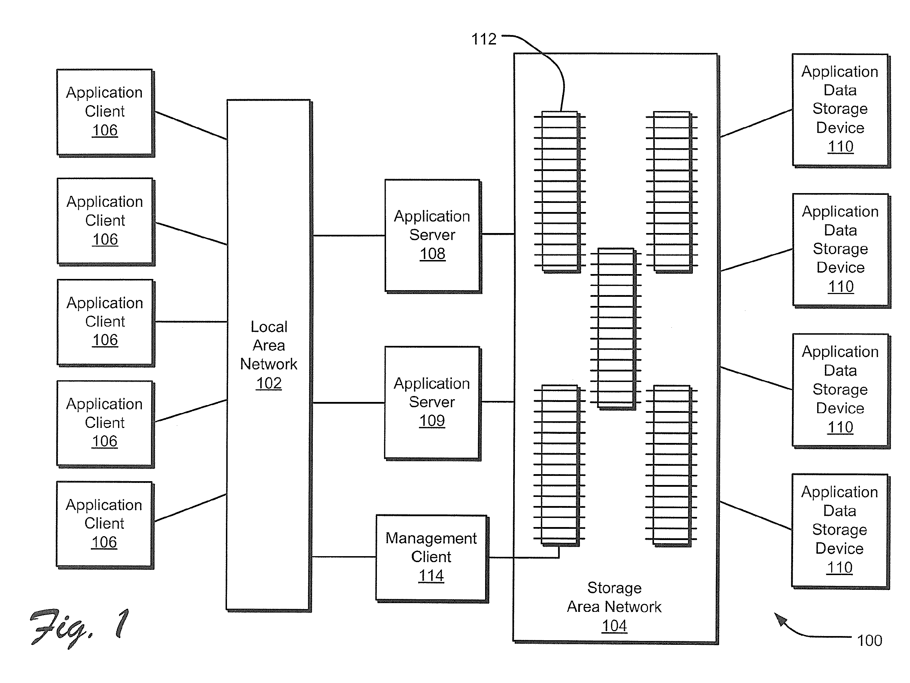

FIG. 1 illustrates an exemplary computing and storage framework 100 including a local area network (LAN) 102 and a storage area network (SAN) 104. Various application clients 106 are networked to application servers 108 and 109 via the LAN 102. Users can access applications resident on the application servers 108 and 109 through the application clients 106. The applications may depend on data (e.g., an email database) stored at one or more of the application data storage devices 110. Accordingly, the SAN 104 provides connectivity between the application servers 108 and 109 and the application data storage devices 110 to allow the applications to access the data they need to operate. It should be understood that a wide area network (WAN) may also be included on either side of the application servers 108 and 109 (i.e., either combined with the LAN 102 or combined with the SAN 104).

Within the SAN 104, one or more switches 112 provide connectivity, routing and other SAN functionality. A SAN can comprise a set of one or more fabrics, which are generally collections of interconnected switches that have established communications among them to facilitate communication between any pair of devices attached to those switches.

Some such switches 112 may be configured as a set of blade components inserted into a chassis. The chassis has a back plane or mid-plane into which the various blade components, such as switching blades and control processor blades, may be inserted. Alternatively, one or more switches may be modular in nature, such that individual port modules (having data ports and an internal switching fabric) and possibly individual switch modules (providing additional switching capacity to various port modules) are interconnected together to provide a highly scalable switch configuration.

A management client 114 can be used to manage server provisioning, which may include changes to the SAN configuration (such as zoning changes). The management client 114 may be coupled into one or more servers (e.g., via the LAN or a dedicated Ethernet connection) and one or more switches within the SAN (e.g., via the SAN or a dedicated Ethernet connection). In an enterprise grid computing environment, these configuration changes should be propagated and applied throughout the fabric quickly and efficiently. For example, if an application is moved to a different server, the storage configuration relating to that server should change quickly to allow a new server to access storage needed by a migrated application. Alternatively, if a new switch is added to the SAN, the storage configuration in the SAN may alter quickly to take advantage to the new switching functionality. Accordingly, in reaction to a configuration change in the SAN, the management client 114 issues a differential configuration update command. Components of the management client 114 can then implement differential configuration changes (e.g., zoning) in response to this command and then propagate the command into the fabric to individual switches, which also implement the differential changes.

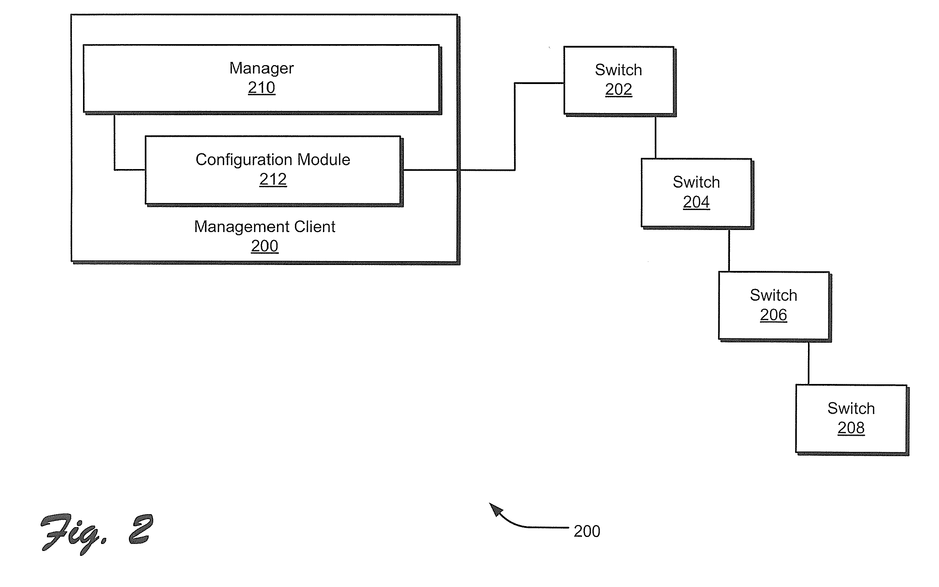

FIG. 2 illustrates an exemplary management client 200 coupled to switches 202, 204, 206, and 208 in a storage area network. A manager 210 monitors resources (e.g., servers, applications, storage, and connectivity devices) and system requirements for anticipated peak workloads. Based on monitoring results, the manager 210 can then trigger the appropriate responses in accordance with business priorities. For example, an application may be migrated from a busy server to another less-busy server. However, to accomplish this migration, the manager 210 also instructs a SAN management module, such as configuration module 212, to change the zoning supported by switches managed by the SAN management module.

In one implementation, each configuration module maintains an internal data structure in the form of a hierarchical configuration object, which store characteristics of various devices and logical parameters of the SAN. For example, zoning is a method of subdividing a SAN into disjoint zones or subsets of nodes on the network. SAN nodes outside a zone are invisible to nodes within the zone. A zone defines a group of devices in a SAN that can communicate with and access each other. Although zones help isolate devices and processes that should not communicate, an individual device can be in multiple zones so that shared resources can be accessed by many devices in different zones.

Zoning is enforced by an active zone set maintained by the switches in the SAN, and by various configuration modules managing the devices in the SAN. Zoning is typically characterized by a hierarchical structure. For example, in one architecture, a zone set includes one or more zones, each zone including two or more zone members, such as servers and/or storage devices. When a zone set is activated, all zones within the zone set are activated simultaneously. A zone member is identified by either the physical port number to which it is attached to a switch or by its World Wide Name (WWN). The WWN is unique throughout the world, and various forms of WWNs are defined in the ANSI standard Fiber Channel Framing and Signaling (FC-FS).

In one type of zoning, zoning is enforced by fabric routing tables maintained by switches in the storage network. If a port of a switch is not authorized to communicate with another port in the switch, the routing table entry for the port is disabled so that communication does not occur. Another type of zoning (e.g., name server zoning) employs a name server database maintained in the switch. The name server database stores WWNs and device registered information to identify individual devices during the zoning process. When zoning changes in a fabric, each device in the name server database receives a registered state change notification (RSCN). In response to the RSCN, a device may query the name server database to determine its connectivity to other devices. All device query results are filtered by the querying device's zoning.

Multiple zone sets can be maintained for a given SAN. For example, when two operating systems must use a single device, such as a tape device in distinct Windows NT and Unix zones, different zone sets can be activated when each operating system needs to backup data. When a server running Windows NT needs to use the tape device, a first zone set is activated so that only the Windows NT service can access the tape device. Likewise, when a server running UNIX needs to use the tape device, a second zone set is activated so that only the UNIX service can access the tape device. This zoning approach allows user's to choose different zoning configurations based on specific communication needs (e.g., between applications and associated storage across a fabric).

When two or more fabrics are combined to form a single fabric, all fabrics exchange zoning configuration among them, and when possible, all zoning configuration data is merged together. After the multiswitch fabric is operational, changes in zone membership are propagated to and validate by every switch in the fabric. When a management application requests activation of a new zone set, the fabric initiates a Fabric Change Authorization (e.g., as defined in the FC-SW specification). This change authorization is transparent to users but ensures that zoning is consistent throughout the fabric.

Managers and switches can support the Fibre Channel - Security Protocol (FC-SP), a security protocol for Fibre Channel Protocol (FCP) and fiber connectivity (Ficon). FC-SP is a project of Technical Committee T11 of the International Committee for Information Technology Standards (INCITS). The FC-SP specification includes protocols to enhance Fibre Channel security in several areas, including authentication of Fibre Channel devices, cryptographically-secure key exchange, and cryptographically secure-communication between Fibre Channel devices. FC-SP is focused on protecting data in transit throughout the Fibre Channel network and does not address the security of data which is stored on the Fibre Channel network.

With the context of a SAN that supports FC-SP, the management client 200 can specify a configuration change instruction to the SAN containing the switches 202, 204, 206, and 208. The configuration change instruction can take the form of an instruction containing a complete configuration description including one or more differential changes from the current configuration state or an instruction that includes only the differential changes from the current configuration state. In either case, a differential configuration update command is derived from the differential configuration change instruction and applied to one or more hierarchical configuration objects in the configuration module 212. For example, given a complete configuration description (e.g., an complete zone set object), a configuration module can compare current and desired zone sets to generate a differential configuration change instruction that can be applied to the active zone set and/or zone set library maintained by the configuration module 212. It should also be understood that the described technology can also be applied to SANs that do not specifically support FC-SP.

One exemplary hierarchical configuration object may be an active zone set object including a zone set identifier, two or more zone identifiers, and two or more zone members (i.e., devices) in each zone. Alternatively, the zone set object may be non-active and reside in a library or database of multiple zone sets, which may be activated by command of the manager 210. Furthermore, the differential configuration update command may be propagated from switch to switch in order to update the active zone set or zone set library in each switch and therefore updating the zoning configuration maintained by said switches within the fabric.

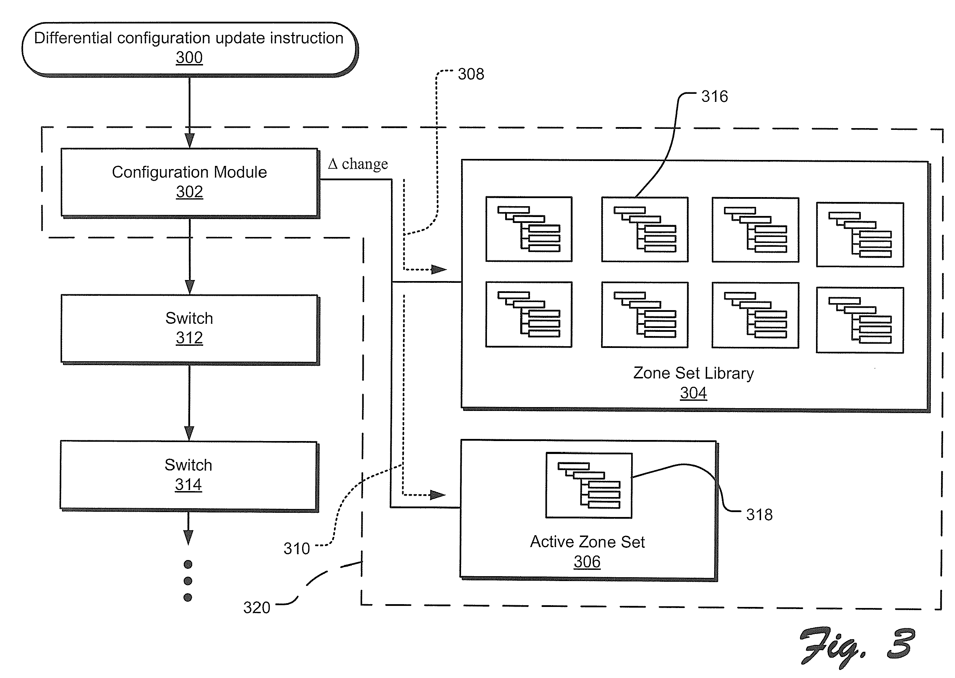

FIG. 3 illustrates a configuration update to an exemplary configuration module. A configuration update may occur in response to some configuration change in the SAN, including without limitation an addition/removal of a new server, switch or storage device and/or a migration of an application from one server to another. Based on the automatic detection of the network change or manual instructions by a user, for example, a management module sends a differential configuration update command 300 to a configuration module 302 associated with a device in the SAN. The differential configuration update command 300 is to be applied within the datastores of the configuration module 302 and then propagated out to all of the switches in the fabric (such as switches 312 and 314). In one implementation, the differential configuration update command is ordered in a format that conforms to the ordered format of the zone set objects in the library 304 or in the active set 306.

The differential configuration update command 300, for example, may request that a zone set be altered to reflect or accommodate the change in the storage network. In one implementation, the differential configuration update command 300 includes information relating to the differences between desired storage network configuration state and the current storage network configuration state. For example, the differential configuration update command 300 may specify that a new storage device be added as a member of a particular zone, thereby enabling communications with the new storage device by other member devices in the zone. In addition, in some implementations, multiple differential changes may be specified in a single differential configuration update command.

Data communicated in an exemplary differential configuration update command may include a zone set identifier and a directive, wherein the directive specifies the differential configuration change instructed by the differential configuration update command. Exemplary directives may include without limitation: "add" (a zone to a zone set or a distributed zone set library), "remove" (a zone from a zone set or a distributed zone set library), "modify" (a zone set), and "rename" (a zone set). Depending on the type of directive, the differential configuration update command may also include zone identifiers, zone member identifiers, security parameters, Quality of Service (QoS) parameters, and other configuration parameters.

Furthermore, a differential configuration update command applied to security parameters (e.g., instead of zoning parameters) can consist of a set of added or removed port, switch, fabric binding settings. Such settings can restrict a given port, switch or fabric to be communicatively connected to a specified device or list of switches. Similarly, QoS parameters can change priority settings of a given set of ports.

In the illustrated implementation, the configuration module 302 maintains (as represented by dashed box 320) both a library 304 (e.g., a database) of zone set objects 316 and an active zone set 306, embodied by zone set object 318. In an alternative implementation, the configuration module 302 maintains a single zone set object, even if the zone set is the active zone set, and merely references the zone set object (e.g., from the library 304 or from a zone set reference value in the configuration module 302. In other implementations, either the library 304 and/or the active zone set object 306 may not be maintained by a configuration module at all. For example, in one implementation, differential configuration update commands are propagated directly to the switches in the fabric to alter active zone set objects and/or libraries maintained by the switches.

Based on the differential configuration update command 300, the configuration module 302 can identify the one or more specified zone sets, determine an index (or pointer) to the specified zone set object in the library 304 and effect the specified directive within that zone set object (represented by the "Δ change" token and a dotted arrow 308 in FIG. 3). For example, if a device is to be added to a given zone set in the library 304, the configuration module 302 can use the zone set identifier as a hash key into a hash table to obtain a pointer to the appropriate zone set object in the library 304. In this manner, the configuration module 302 need not search through the entire zone set library 304 (which can be quite extensive) to find the proper zone set object. Likewise, using indexing architectures, the configuration module 302 can also obtain indices to zone objects within or referenced by the zone set object and to individual zone member objects within or referenced by a given zone object. Once identified, the individual elements of the zone set object can be updated based on the specified directive.

In another implementation, the configuration module 302 can determine whether one of the specified zone sets is the active zone set (e.g., a simple comparison of zone set identifiers). If so, a similar indexing operation can yield an index (or pointer) to the specified elements (e.g., zone objects or zone member objects) within or referenced by the active zone set object maintained by the configuration module 302 and effect the specified directive within that zone set (represented by the "Δ change" token and a dotted arrow 310 in FIG. 3).

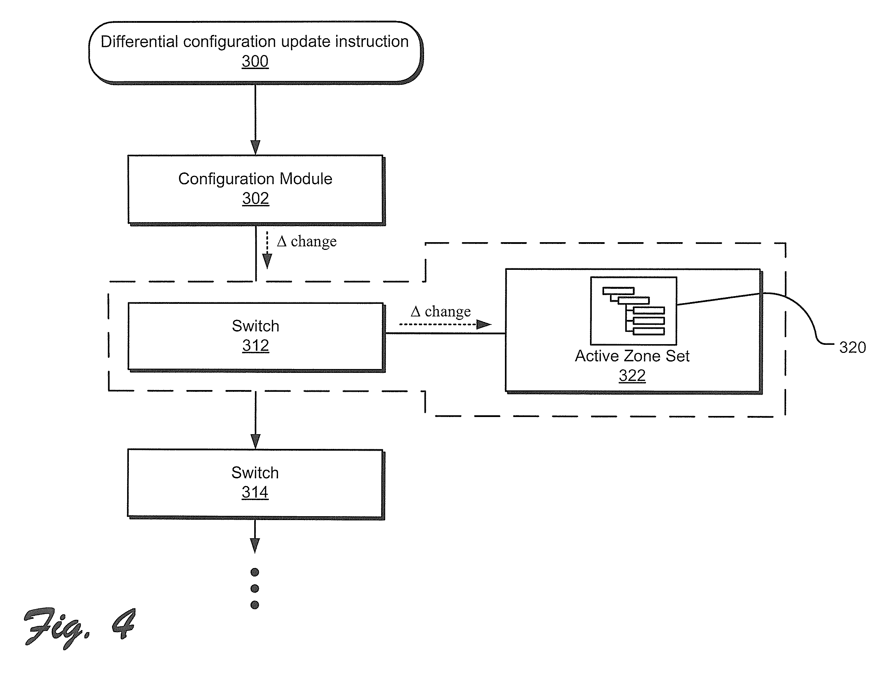

FIG. 4 illustrates a configuration update to the exemplary switch 312. The configuration manager 302 communicates a differential configuration update command to the switch 312. In one implementation, the differential configuration update command between the configuration manager 302 and the switch 312 is in the form of an SFC request or some similar command. Furthermore, in one implementation, the differential configuration update command is ordered or sorted at each level of hierarchy that exists within the command. The ordered format of the differential configuration update command corresponds to the ordered format of the zone set object 320 in the active set 322 stored by the switch. It should also be understood that a switch could also maintain a zone set library or database, which may be differentially updated as described herein.

Stage Fabric Configuration (SFC) requests are class F frames addressed from the domain controller of the managing switch (or configuration module) to the domain controller of a managed switch to stage the configuration changes in each switch. For example, SFC operation requests can instruct the recipient to activate, deactivate, or alter a zone set or a zone set library. Similar commands may be communicated between management software and a switch or between a manager and a configuration module, although different protocols and formats are contemplated. In the case of differential configuration requests, two exemplary SFC operation requests include:

**Table 1 - Exemplary Differential Configuration Update Commands**

| SFC Operation Request | Description |
|---|---|
| Delta Update Active Zone Set | Applies to the active zone set; updates the configuration by applying the received modification to the active zone set; modifies the active zone set in accordance with a differential change (i.e., a delta) from the current zone set state, without requiring transmission of the entire active zone set data structure to the recipient. |
| Delta Update Distributed Zone Set Database | Applies to the zone set library; modifies the zone set library in accordance with a differential change (i.e., a delta) from the current zone set library and transmits the differential changes over the fabric, without requiring transmission of the entire zone set database object to the recipient |

The exemplary Delta Update Active Zone Set request represents an exemplary differential configuration update command for an active zone set and includes an ordered or sorted payload:

**Table 2 - Exemplary Differential Configuration Update Command Payload**

| Field | Description |
|---|---|
| Reserved | |
| Flags | |
| Enhanced Zoning Flags | |
| Affected Zones List Length | The length, in bytes, of the list of Affected Zone objects that follows |
| Affected Zone #1 | An Affected Zone Object |
| ... | ... |
| Affected Zone #n | An Affected Zone Object |
| Active Zone Set Hash | The hash of the zone set being affected |
| Optional Data | |

In one implementation, the Affected Zone Objects in the list are ordered based on their zone names (identifiers), as identified in the zone objects (see below).

An exemplary Affected Zone Object has the following format:

**Table 3 - Exemplary Zone Object**

| Field | Description |
|---|---|
| Zone Name | The zone name as defined in the FC-SW specification |
| Reserved | |
| Directive | The update operation requested (e.g., add, remove, modify, rename) |
| Zone Change Data Length | The length, in bytes, of the Zone Change Data |
| Zone Change Data | If the directive's value is Add, this field contains a Zone Object; if this directive's value is Remove, this field contains no data; if this directive's value is Modify, this field contains the Zone Modification List; if the directive's value is Rename, this field contains the new Zone Name. |

An exemplary Zone Modification List has the following format:

**Table 4 - Exemplary Zone Modification List**

| Field | Description |
|---|---|
| Number of Member Modifications | The number of Member Modification Objects in the List |
| Member Modification Object #1 | A Member Modification Object |
| ... | ... |
| Member Modification Object #2 | A Member Modification Object |

An exemplary Member Modification Object has the following format:

**Table 5 - Exemplary Member Modification Object**

| Field | Description |
|---|---|
| Zone Member | A Zone Member as defined in FC-SW-4 specification |
| Member Directive | The member update operation requested (e.g., add, remove, modify, replace) |
| Replacement Zone Member | If the Member Directive is Replace, this field contains the replacing Zone Member |

The exemplary Delta Update Distributed Zone Set Database request represents an exemplary differential configuration update command for a library and includes an ordered or sorted payload:

**Table 6 - Exemplary Differential Configuration Update Command Payload for Libraries**

| Field | Description |
|---|---|
| Reserved | |
| Flags | |
| Enhanced Zoning Flags | |
| Affected Zones Set List Length | The length of the Affected Zone List in bytes |
| Affected Zone Set #1 | An Affected Zone Set Object |
| ... | ... |
| Affected Zone Set #n | An Affected Zone Set Object |
| Affected Zone Alias List Length | The length of the Affected Zone Alias List in bytes |
| Affected Zone Alias #1 | An Affected Zone Alias Object |
| ... | ... |
| Affected Zone Alias #m | An Affected Zone Alias Object |
| Zone Set Database Hash | The hash of the zone set being affected |
| Optional Data | |

In one implementation, the Affected Zone Set objects and Affected Zone Set Alias objects in the list are ordered based on their zone set and alias names (identifiers), as identified in the zone set and zone set alias objects (see below).

An exemplary Affected Zone Set Object has the following format:

**Table 7 - Exemplary Affected Zone Set Object**

| Field | Description |
|---|---|
| Affected Zone Set Name | The name (identifier) of the Affected Zone Set |
| Reserved | |
| Directive | The update operation requested (e.g., add, remove, modify, rename) |
| Affected Zone Set Change Length | The length of the Affected Zone Set Change |
| Affected Zone Set Change | If the directive's value is Add, this field contains a list of Zone Names; if this directive's value is Remove, this field contains no data; if this directive's value is Modify, this field contains a list of Affected Zone Modifications; if the directive's value is Rename, this field contains the new Zone Set Name. |

An exemplary List of Zone Names has the following format:

**Table 8 - Exemplary List of Zone Names**

| Field | Description |
|---|---|
| Zone Names List Length | The length of the Zone Names List in bytes |
| Zone Name #1 | An Affected Zone Name |
| ... | ... |
| Zone Name #n | An Affected Zone Name |

An exemplary List of Affected Zone Modifications has the following format:

**Table 9 - Exemplary List of Affected Zone Modifications**

| Field | Description |
|---|---|
| Affected Zone Modification List Length | The length of the Affected Zone Modification List in bytes |
| Affected Zone #1 | An Affected Zone Object |
| ... | ... |
| Affected Zone #n | An Affected Zone Object |

An exemplary Affected Zone Alias Format Object has the following format:

**Table 10 - Exemplary Affected Zone Alias Format Object**

| Field | Description |
|---|---|
| Affected Alias Name | The name (identifier) of the Affected Alias |
| Reserved | |
| Directive | The update operation requested (e.g., add, remove, modify, rename) |
| Affected Alias Change Length | The length of the Affected Alias Change |
| Affected Alias Change | If the directive's value is Add, this field contains a list of Alias members; if this directive's value is Remove, this field contains no data; if this directive's value is Modify, this field contains a list of Affected Alias Modifications; if the directive's value is Rename, this field contains the new Alias Name. |

An exemplary Alias Modification Object has the following format:

**Table 11 - Exemplary Alias Modification Objects**

| Field | Description |
|---|---|
| Number of Alias Modifications | The number of Alias Modification Objects |
| Alias Modification Object #1 | An Alias Modification Object |
| ... | ... |
| Alias Modification Object #n | An Alias Modification Object |

An exemplary Alias Modification Object has the following format:

| Field | Description |
|---|---|
| Zone Alias Member | An Alias Member as defined in FC-SW on which the directive is to be acted |
| Zone Alias Member Directive | The Alias Member update operation requested (e.g., add, remove, modify, replace) |
| Replacement Zone Alias Member | If the Zone Alias Member Directive is Replace, this field contains the replacing Zone Member. |

It should be understood that the requests and data structures described herein are merely exemplary and that alternative and additional requests and data structures may be employed.

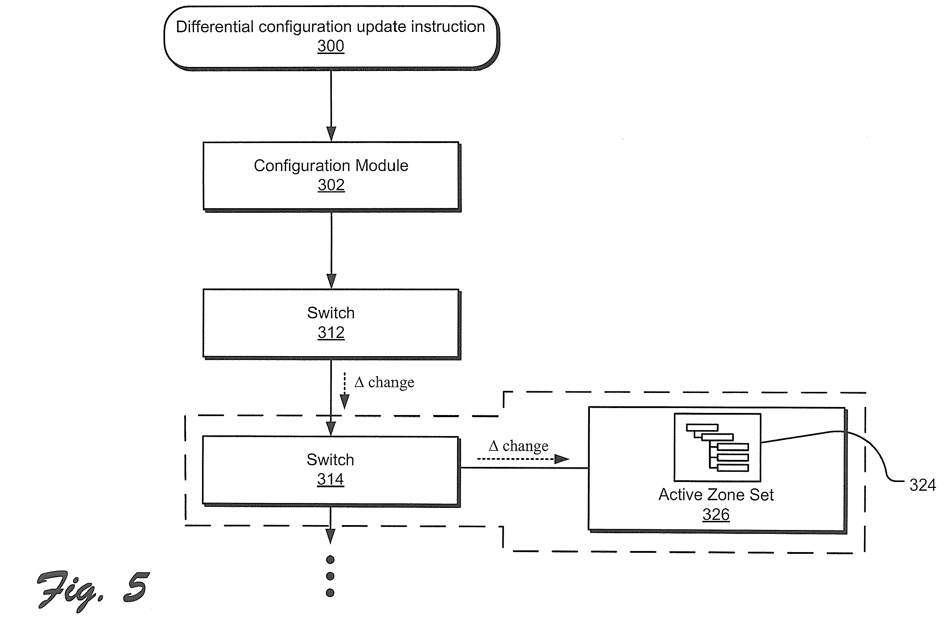

FIG. 5 illustrates a configuration update to a second exemplary switch 314. Switch 312 communicates a differential configuration update command to the switch 314. In one implementation, the differential configuration update command between the switch 312 and the switch 314 is in the form of an SFC request, as described above, although other formats are contemplated. Furthermore, in one implementation, the differential configuration update command is ordered or sorted at each level of hierarchy that exists within the command. In one implementation, the ordered format of the differential configuration update command corresponds to the ordered format of the zone set object 324 in the active set 326 stored by the switch. It should also be understood that a switch could also maintain a zone set library or database, which could be differentially updated as described herein.

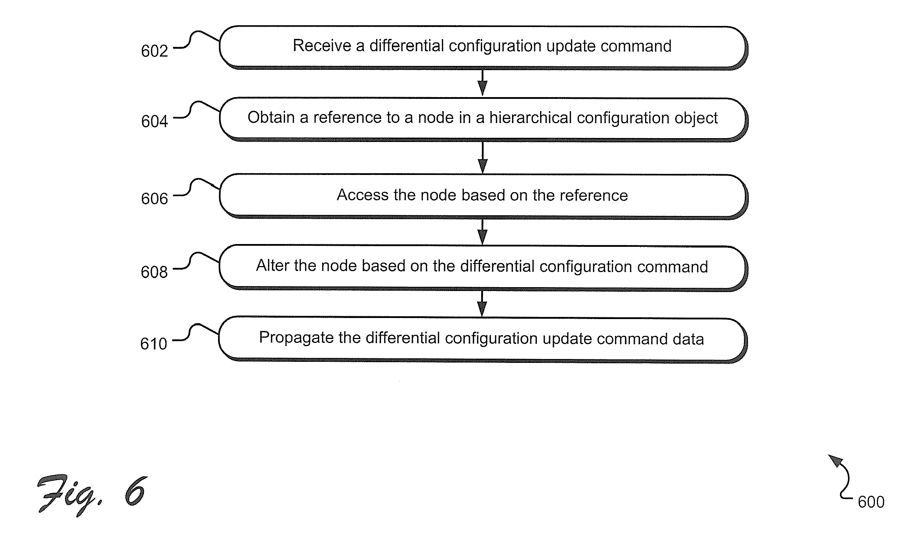

FIG. 6 illustrates exemplary operations 600 for updating configuration of a hierarchical configuration object of a configuration module. A receiving operation 602 receives a differential configuration update command, such as an SFC request (or other differential request) to add, remove, modify, or rename/replace elements of a zone set. An indexing operation 604 obtains a reference to a node in a hierarchical configuration object (e.g., a zone set object or name, a zone object or name, a zone member object or name, etc.). In one implementation, a zone set name or other element name from the differential configuration update command is used as a hash key to obtain a reference (e.g., an index or pointer) into the zone set object. Alternatively, the zone set object can be traversed and examined.

An accessing operation 606 accesses the zone set object and/or element object based on the reference. An altering operation 608 modifies the node in accordance with a directive in the differential configuration command. For example, a new zone member can be inserted in a specified zone in a hierarchical configuration object. The modification can occur at multiple levels of hierarchy in the zone set object. A propagation operation 610 derives differential configuration update command data and transmits it to a switch in the fabric. Propagation can then occur throughout the fabric to all other switches therein. Each switch receiving the differential configuration update command data can then be updated with the configuration change.

It should be understood that the operations described with regard to FIG. 6 could also be applied to switch-level configuration updates and to both active zone set and library configurations.

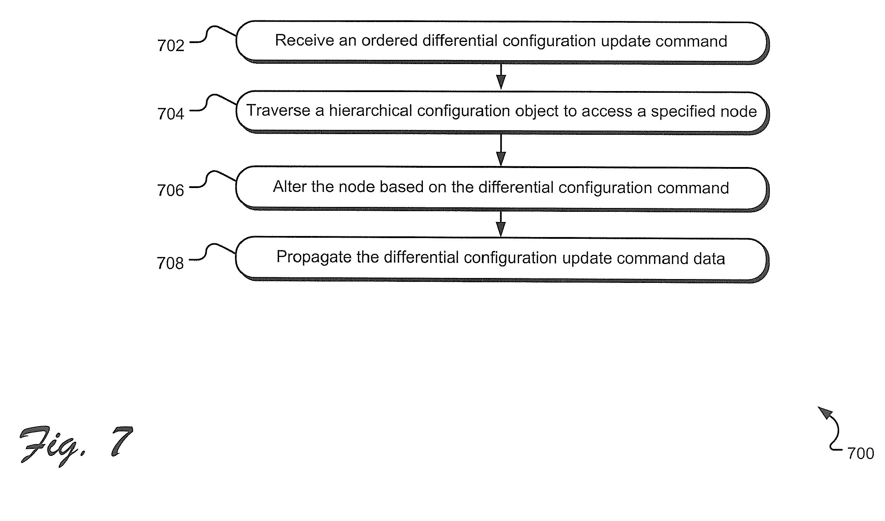

FIG. 7 illustrates exemplary operations 700 for updating configuration of a hierarchical configuration object of a switch. A receiving operation 702 receives a differential configuration update command, such as an SFC request to add, remove, modify, or rename/replace elements of a zone set. The differential configuration update command is ordered to allow a one-pass traversal of the hierarchical configuration object (e.g., an active zone set object) during an update. A traversal operation 704 traverses the hierarchical configuration object, comparing encountered nodes of the object to a current node in the differential configuration update command. If an encountered node ordered to precede the current node in the differential configuration update command based on the common ordered format, the traversal operation 704 copies the encountered node to a scratch memory buffer. Otherwise, the traversal operation 704 applies the directive in the differential configuration update command to the scratch memory buffer. For example, if the directive is Add, the specified elements are added to the hierarchical configuration object being built in the scratch memory buffer. If the directive is Remove, the specified elements are skipped and not recorded to the hierarchical configuration object being built in the scratch memory buffer. The traversal operation 704 continues to traverse through the existing hierarchical configuration object and through the one or more elements of the differential configuration update command until the entire updated hierarchical configuration object completed in the scratch memory buffer.

An altering operation 706 replaces the active hierarchical configuration object with the hierarchical configuration object in the scratch memory buffer, thereby updating the configuration in the switch, for example. In one implementation, the altering operation 706 designates the hierarchical configuration object in the scratch memory buffer as the active configuration object (e.g., the active zone set). A propagation operation 708 derives differential configuration update command data and transmits it to a switch in the fabric. Propagation can then occur throughout the fabric to all other switches therein. Each switch receiving the differential configuration update command data can then be updated with the configuration change.

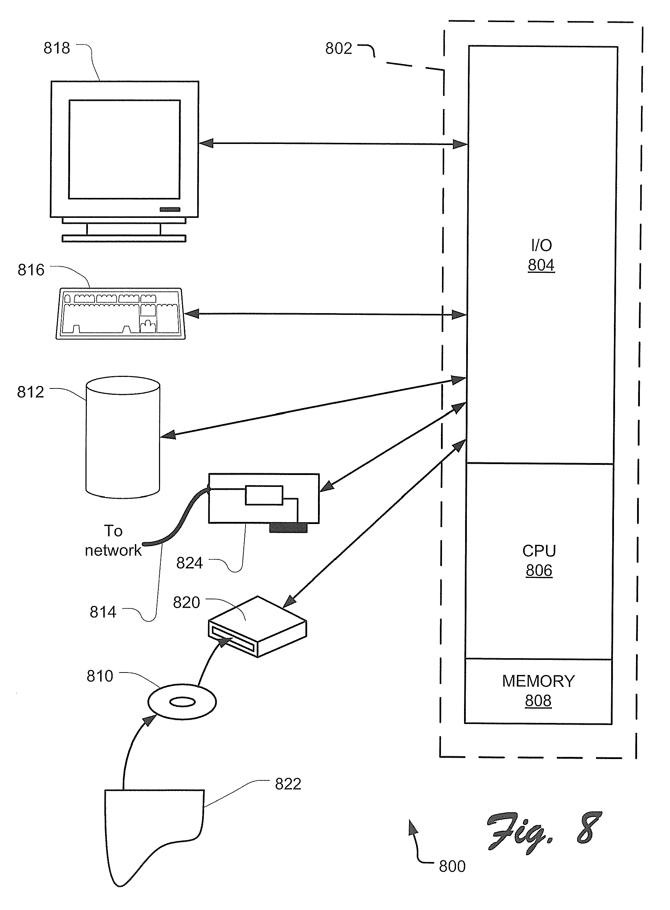

FIG. 8 illustrates an exemplary system useful in implementations of the described technology. A general purpose computer system 800 is capable of executing a computer program product to execute a computer process. Data and program files may be input to the computer system 800, which reads the files and executes the programs therein. Some of the elements of a general purpose computer system 800 are shown in FIG. 8 wherein a processor 802 is shown having an input/output (I/O) section 804, a Central Processing Unit (CPU) 806, and a memory section 808. There may be one or more processors 802, such that the processor 802 of the computer system 800 comprises a single central-processing unit 806, or a plurality of processing units, commonly referred to as a parallel processing environment. The computer system 800 may be a conventional computer, a distributed computer, or any other type of computer. The described technology is optionally implemented in software devices loaded in memory 808, stored on a configured DVD/CD-ROM 810 or storage unit 812, and/or communicated via a wired or wireless network link 814 on a carrier signal, thereby transforming the computer system 800 in FIG. 8 to a special purpose machine for implementing the described operations.

The I/O section 804 is connected to one or more user-interface devices (e.g., a keyboard 816 and a display unit 818), a disk storage unit 812, and a disk drive unit 820. Generally, in contemporary systems, the disk drive unit 820 is a DVD/CD-ROM drive unit capable of reading the DVD/CD-ROM medium 810, which typically contains programs and data 822. Computer program products containing mechanisms to effectuate the systems and methods in accordance with the described technology may reside in the memory section 804, on a disk storage unit 812, or on the DVD/CD-ROM medium 810 of such a system 800. Alternatively, a disk drive unit 820 may be replaced or supplemented by a floppy drive unit, a tape drive unit, or other storage medium drive unit. The network adapter 824 is capable of connecting the computer system to a network via the network link 814, through which the computer system can receive instructions and data embodied in a carrier wave. Examples of such systems include SPARC systems offered by Sun Microsystems, Inc., personal computers offered by Dell Corporation and by other manufacturers of Intel-compatible personal computers, PowerPC-based computing systems, ARM-based computing systems and other systems running a UNIX-based or other operating system. It should be understood that computing systems may also embody devices such as Personal Digital Assistants (PDAs), mobile phones, gaming consoles, set top boxes, etc.

When used in a LAN-networking environment, the computer system 800 is connected (by wired connection or wirelessly) to a local network through the network interface or adapter 824, which is one type of communications device. When used in a WAN-networking environment, the computer system 800 typically includes a modem, a network adapter, or any other type of communications device for establishing communications over the wide area network. In a networked environment, program modules depicted relative to the computer system 800 or portions thereof, may be stored in a remote memory storage device. It is appreciated that the network connections shown are exemplary and other means of and communications devices for establishing a communications link between the computers may be used.

In accordance with an implementation, software instructions and data directed toward dynamically updating configuration of a SAN and other operations may reside on disk storage unit 809, disk drive unit 807 or other storage medium units coupled to the system. Said software instructions may also be executed by CPU 806.

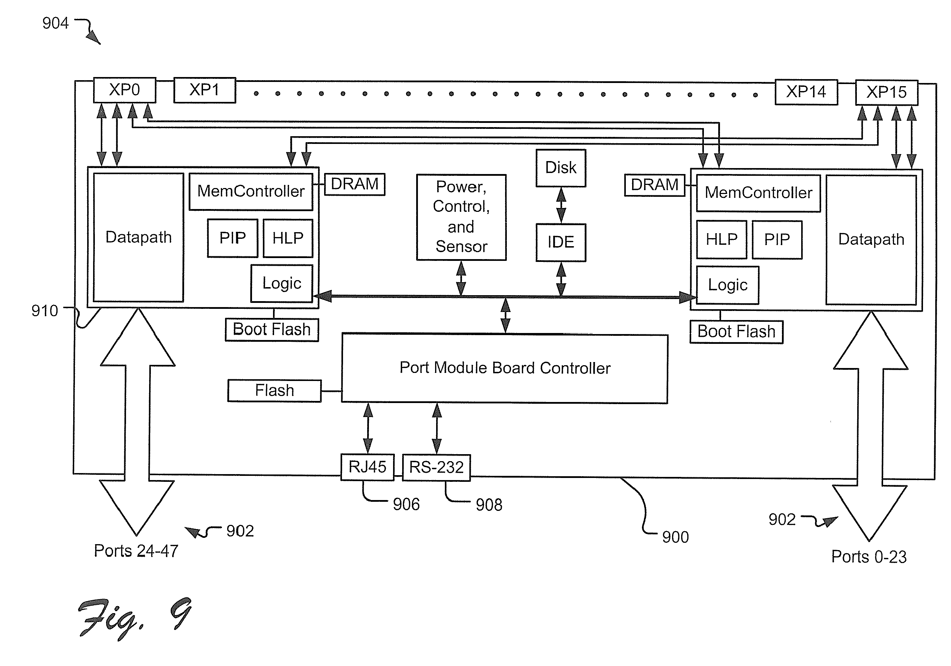

FIG. 9 schematically illustrates an exemplary port module 900, which includes 48 user ports 902 (also referred to as front ports), 16 extender ports 904 (also referred to as X ports - XP00 through XP15), and switching functionality. The port module 900 also supports a management Ethernet interface 906 (RJ45) and a serial interface 908 (RS-232). Internally, the port module 900 includes two port module ASICs 910 and 912, wherein each ASIC includes two individual embedded processor cores, a port intelligence processor (PIP) and high level processor (HLP) (e.g., 666 MHz PowerPC 440SPs or some other processor core). The processors share access to common DRAM and flash memory through the illustrated memory controller in each ASIC. The module also includes a power supply and cooling features (e.g., one or more fans), although alternative configurations may receive power from a common (i.e., shared with one or more other modules) power supply and/or receive cooling from a common cooling feature.

Each ASIC provides, among other functions, a switched datapath between a subset of the user ports 902 and the 16 extender ports 904. For a stand-alone port module, its extender ports are cabled together. For a stacked configuration, the extender ports of the port modules are cabled together. For a racked configuration, the extender ports of the port modules and the switch modules are cabled together. In one implementation, the extender ports are cabled using four parallel bi-directional fiber or copper links, although other configurations are contemplated.

It should be understood that processors on other devices may also execute the operations described herein.

In accordance with an implementation, software instructions and data directed toward dynamically updating configuration of a SAN and other operations may reside DRAM or flash memory or other storage medium units in the device. Said software instructions may also be executed by a PIP or HLP.

The embodiments of the invention described herein are implemented as logical steps in one or more computer systems. The logical operations of the present invention are implemented (1) as a sequence of processor-implemented steps executing in one or more computer systems and (2) as interconnected machine or circuit modules within one or more computer systems. The implementation is a matter of choice, dependent on the performance requirements of the computer system implementing the invention. Accordingly, the logical operations making up the embodiments of the invention described herein are referred to variously as operations, steps, objects, or modules. Furthermore, it should be understood that logical operations may be performed in any order, unless explicitly claimed otherwise or a specific order is inherently necessitated by the claim language.

The above specification, examples and data provide a complete description of the structure and use of exemplary embodiments of the invention. Since many embodiments of the invention can be made without departing from the scope of the invention, the invention resides in the claims hereinafter appended. Furthermore, structural features of the different embodiments may be combined in yet another embodiment without departing from the recited claims.

## Claims

1. A method of updating a hierarchical configuration object representing configuration of a storage area network, the method comprising:
receiving a differential configuration update command specifying a differential change to the hierarchical configuration object, the differential change being associated with a node in the hierarchical configuration object that is identified by a node identifier provided in the differential configuration update command;
obtaining a reference to the node in the hierarchical configuration object based on the node identifier;
accessing the node in the hierarchical configuration object based on the reference; and
altering the node in the hierarchical configuration object to reflect the differential change specified in the differential configuration update command.

2. The method of claim 1 wherein the obtaining operation comprises:
hashing on the node identifier to obtain the reference to the node in the hierarchical configuration object.

3. The method of claim 1 wherein nodes of the hierarchical configuration object are ordered in an ordered format and nodes of the differential configuration update command are ordered in the ordered format.

4. A method of updating a hierarchical configuration object representing configuration of a storage network, wherein the hierarchical configuration object conforms to an ordered format, the method comprising:
receiving a differential configuration update command specifying a differential change to the hierarchical configuration object, wherein the differential configuration update command conforms to the ordered format and the differential change is associated with a node in the hierarchical configuration object that is identified by a node identifier provided in the differential configuration update command;
traversing the hierarchical configuration object in accordance with the ordered format to access the node in the hierarchical configuration object; and
altering the node in the hierarchical configuration object to reflect the differential change specified in the differential update command.

5. The method of claim 1 or claim 4 wherein the hierarchical configuration object represents one of:
an active zone set in the configuration of the storage area network and the differential configuration update command specifies a differential change to a zone within the active zone set, or
a zone set in a zone set library associated with the configuration of the storage area network and the differential configuration update command specifies a differential change to a zone within the zone set of the zone set library.

6. The method of claim 1 or claim 4 wherein the hierarchical configuration object is stored in:
memory of a management client, or
memory of a switch.

7. The method of claim 4 wherein the traversing operation comprises at least one of:
copying a node in the hierarchical configuration object to a memory buffer, if the node identifier of the copied node is ordered to precede the node identifier provided in the differential configuration update command;
writing the node to the memory buffer, if the node identifier of the copied node is not ordered to precede the node identifier provided in the differential configuration update command and the differential configuration update command specifies an add directive;
skipping the node, if the node identifier of the copied node is not ordered to precede the node identifier provided in the differential configuration update command and the differential configuration update command specifies a remove directive;
writing the node to the memory buffer, if the node identifier of the copied node is not ordered to precede the node identifier provided in the differential configuration update command and the differential configuration update command specifies a modify directive;
writing the node to and renaming the node in the memory buffer, if the node identifier of the copied node is not ordered to precede the node identifier provided in the differential configuration update command and the differential configuration update command specifies a rename directive.

8. The method of claim 4 wherein nodes in the memory buffer constitute a hierarchical configuration object and the altering operation comprises:
designating the hierarchical configuration object in the memory buffer as an active configuration object.

9. The method of claim 1 or claim 4 wherein the hierarchical configuration object represents a set of security parameters or a set of quality of service parameters.

10. A computer program which when run on a computer is adapted to carry out the method steps of any one of claims 1 to 9.

11. A system for updating a hierarchical configuration object representing configuration of a storage area network, the system comprising:
a memory that stores a hierarchical configuration object having a node that is identified by a node identifier; and
a configuration module that receives a differential configuration update command specifying a differential change to the node of the hierarchical configuration object, obtains a reference to the node in the hierarchical configuration object based on the node identifier; and alters the node in the hierarchical configuration object to reflect the differential change specified in the differential configuration update command.

12. A system for updating a hierarchical configuration object representing configuration of a storage network, wherein the hierarchical configuration object complies with an ordered format, the system comprising:
a memory that stores a hierarchical configuration object having an ordered format; and
a configuration module that receives a differential configuration update command specifying a differential change to the node of the hierarchical configuration object, wherein the differential configuration update command complies with the ordered format, traverses the hierarchical configuration object in accordance with the ordered format to access the node in the hierarchical configuration object, and alters the node in the hierarchical configuration object to reflect the differential change specified in the differential configuration update command.
